# FASCICULE DE BREVET EUROPEEN

(11) **EP 0 813 756 B1**
(45) Date de publication et mention de la délivrance du brevet: **22.12.1999**
(21) Numéro de dépôt: 96905898.1
(22) Date de dépôt: 01.03.1996
(51) Int. Cl.: H01R 35/02, B60R 16/02

(54) **CONTACTEUR ELECTRIQUE TOURNANT PERFECTIONNE**
VERBESSERTER ELEKTRISCHER DREHSCHALTER
IMPROVED ROTARY ELECTRICAL CONTACTOR

(30) Priorité: 03.03.1995 FR 9502491
(43) Date de publication de la demande: 29.12.1997
(73) Titulaire: SC2N, 78180 Montigny-le-Bretonneux (FR)
(72) Inventeur: HALLER, Michel, F-14320 Clinchamps/Orne (FR); RODIER, Fabrice, F-51210 Montmirail (FR); BISCARAS, Gérard, F-51210 Montmirail (FR)
(74) Mandataire: Martin, Jean-Jacques
(86) Numéro de dépôt international: FR9600327
(87) Numéro de publication internationale: WO9627924

(56) Documents cités:
- EP-A- 0 320 388
- US-A- 5 219 460

## Description

La présente invention concerne le domaine des contacteurs électriques tournants.

Plus précisément, la présente invention concerne les contacteurs du type comprenant :
- un premier élément de boîtier fixe,
- un second élément de boîtier mobile à rotation par rapport au premier élément de boîtier fixe, et
- un organe conducteur électrique souple placé entre l'élément fixe et l'élément mobile du boîtier et relié à ceux-ci.

La présente invention trouve notamment, mais non exclusivement, application à la transmission de signaux électriques entre des moyens liés au volant d'un véhicule automobile, par exemple un système de gonflage de sac de protection type airbag et des moyens de commande indépendants du volant liés à la colonne de direction.

De nombreux contacteurs électriques tournants du type rappelé ci-dessus ont déjà été proposés.

On peut trouver par exemple un descriptif général de ces contacteurs dans les documents GB-A-869275, GB-A-2216476, US-A-3525536, FR-A-2494922, FR-A-2667457, US-A-4789342, US-A-4540223, FR-A-2667458, FR-A-2667456, FR-A-2477789, DE-A-751684, FR-A-2249458, GB-A-2164506, CH-A-167629, US-A-4422699, US-A-4836795, DE-A-3041258, US-A-4451105, US-A-3525536, US-A-4722690, US-A-4875860.

On a décrit dans les documents FR-A-2665805 et US-A-5046951 des contacteurs électriques tournants du type précité comprenant un premier élément de boîtier fixe, un second élément de boîtier mobile à rotation et un organe conducteur souple, qui comprennent en outre un élément intermédiaire, placé entre le premier élément de boîtier fixe et le second élément de boîtier mobile à rotation, dans lesquels l'élément intermédiaire est entraîné en rotation en synchronisme avec le second élément de boîtier mobile à rotation avec un rapport prédéterminé de réduction de vitesse, par l'intermédiaire d'au moins un pignon moteur en prise entre les deux éléments de boîtier fixe et mobile à rotation, et l'organe conducteur souple est disposé en boucle sur cet élément intermédiaire.

On a décrit dans les documents US-A-4540223, US-A-5219460 et US-A-3763455 d'autres contacteurs électriques tournants dans lesquels un élément intermédiaire, placé entre les deux éléments de boîtier fixe et mobile en rotation, et sur lequel l'organe conducteur souple est disposé en boucle, est prévu librement mobile par rapport aux deux éléments de boîtier fixe et mobile en rotation et l'organe conducteur souple déplace ledit élément intermédiaire.

On a décrit en particulier dans le document US-A-5219460 un contacteur électrique tournant comprenant deux éléments de boîtier susceptible de rotation relative, un organe conducteur souple placé entre ces deux éléments et un élément intermédiaire libre possédant une ouverture généralement radiale et sur lequel est enroulé en boucle le conducteur, cet élément intermédiaire définissant deux chambres auxiliaires en forme de croissant, entre lui-même et les éléments de boîtier respectif, l'une intérieure, l'autre extérieure. Ce document indique à plusieurs reprises que l'élément intermédiaire est entraîné à rotation par l'organe conducteur, quelle que soit l'amplitude des rotations relatives entre les deux éléments de boîtier.

La présente invention a maintenant pour but de perfectionner les contacteurs électriques tournants connus.

Ce but est atteint selon la présente invention grâce à un contacteur du type défini en revendication 1 annexée, laquelle est délimitée sous forme d'un préambule et d'une partie caractérisante, par rapport au document US-A-5 219 460.

Selon une autre caractéristique avantageuse de la présente invention, la chambre auxiliaire est une chambre interne à l'élément intermédiaire définie entre l'élément intermédiaire et un élément central composant l'un des deux éléments de boîtier.

Selon une autre caractéristique avantageuse de la présente invention, la chambre auxiliaire est définie entre l'élément intermédiaire et l'élément de boîtier mobile à rotation.

D'autres caractéristiques, buts et avantages de la présente invention apparaitront à la lecture de la description détaillée qui va suivre, et en regard des dessins annexés donnés à titre d'exemple non limitatif et sur lequels :
- la figure 1 représente une vue schématique en coupe transversale d'un contacteur électrique tournant conforme à la présente invention,
- les figures 2 et 3 représentent des vues en coupe transversale similaire du même contacteur, dans des positions relatives différentes des deux éléments de base composant le boîtier,
- les figures 4 et 5 représentent deux vues en perspective d'un contacteur électrique tournant conforme à la présente invention.

On a représenté sur les figures annexées, un contacteur électrique tournant comprenant principalement un premier élément de boîtier fixe 100, un second élément de boîtier mobile à rotation 200, un organe électriquement conducteur 300 et un élément intermédiaire 400.

Selon la représentation particulière et non limitative donnée sur les figures annexées, le premier élément de boîtier fixe 100 défini une cage cylindrique externe, tandis que le second élément de boîtier mobile à rotation 200 définit une cage cylindrique centrale. Cependant, cette disposition peut être inversée en ce sens que l'élément de boîtier fixe pourrait être central tandis que l'élément mobile définirait une cage externe.

Pour le reste, les éléments de boîtier fixe et mobile 100, 200 peuvent faire l'objet de nombreux modes de réalisation, notamment quant à la structure définissant le logement de réception de l'organe conducteur 300, à leur mode de fixation respectif et à leur mode de liaison électrique avec les extrémités de l'organe conducteur 300, ou encore de réception en traversée des extrémités de ce conducteur 300. Pour cette raison, la structure particulière des éléments de boîtier 100, 200 ne sera pas décrite dans le détail par la suite.

L'organe conducteur électrique souple 300 peut également faire l'objet de nombreux modes de réalisation. De façon connue en soi, il peut s'agir par exemple d'un faisceau de fils électriquement conducteurs isolés entre eux, ou encore de préférence d'un circuit imprimé ou d'un film plastique souple pourvu de plusieurs pistes métallisées parallèles.

Les extrémités du conducteur souple 300 sont reliées respectivement à des contacts électriques placés dans des corps de connecteur prévus sur les éléments de boîtier 100, 200, ou encore les extrémités du conducteur souple 300 traversent et sont supportées par ces éléments de boîtier 100, 200 pour être reliées à des organes périphériques externes tels que par exemple un système de gonflage de sac de protection type airbag et des moyens de commande d'un tel système.

Sur les figures annexées, l'axe de rotation relatif des éléments de boîtier 100, 200 est référencé O-O.

L'élément intermédiaire 400 est placé entre les éléments de boîtier 100, 200. L'élément intermédiaire 400 est librement mobile par rapport aux éléments de boîtier 100, 200, c'est-à-dire que contrairement à certains contacteurs proposés antérieurement, tels que décrits par exemple dans les documents FR-A-2665805 et US-A-5046951, l'élément intermédiaire 400 n'est pas relié aux éléments de boîtier 100, 200 par au moins un pignon moteur définissant un rapport prédéterminé et imposé de déplacement entre l'élément intermédiaire 400 et lesdits éléments de boîtier 100, 200.

En d'autres termes, l'élément intermédiaire 400 est simplement guidé à rotation autour de l'axe O-O précité, entre les éléments de boîtier 100 et 200.

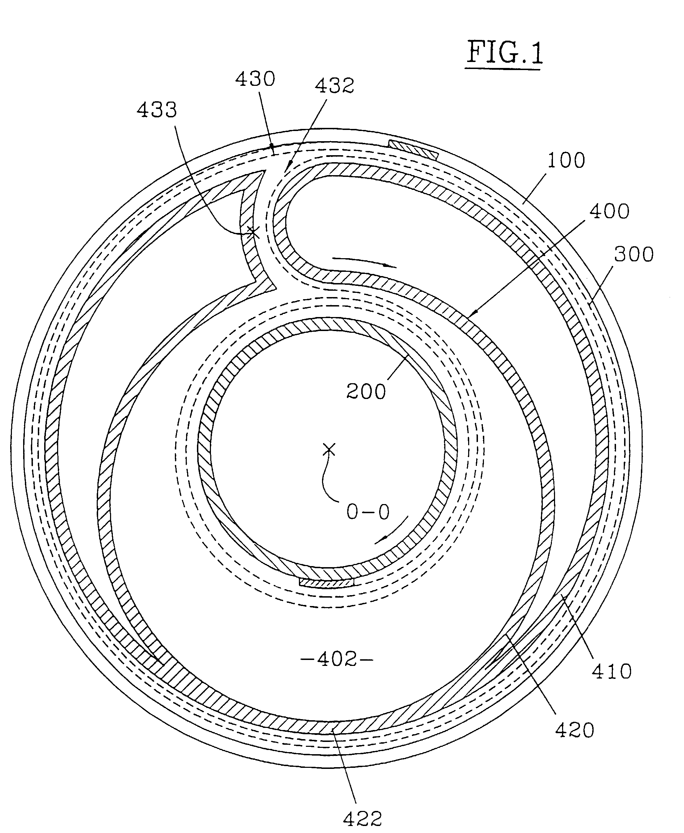

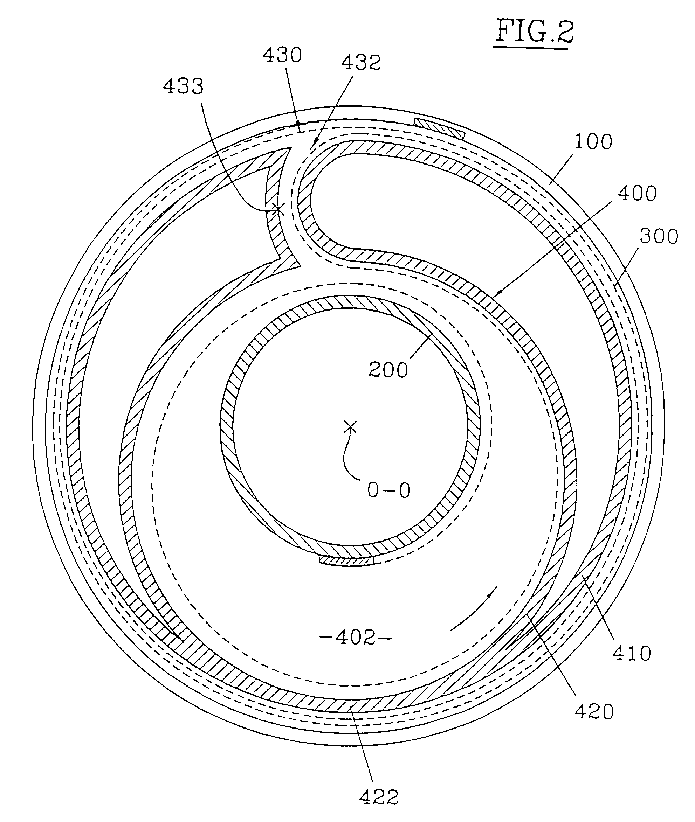

Comme on le voit sur les figures annexées, l'élément intermédiaire 400 défini en combinaison avec l'élément de boîtier central 200, une chambre auxiliaire 402. Selon l'invention, cette chambre 402 est adaptée pour recevoir un nombre variable de spires de l'organe conducteur 300 correspondant à une longueur sensiblement constante de cet organe, selon que ces spires sont plaquées contre ledit élément intermédiaire, comme représenté sur la figure 2, ou contre l'élément de boîtier associé 200 définissant la chambre auxiliaire, comme représenté sur la figure 1, lors d'un déplacement relatif par rotation des deux éléments de boîtier 100, 200, sans rotation relative sensible entre ledit élément intermédiaire 400 et l'autre élément de boîtier 100.

Par ailleurs, comme on le voit sur les figures annexées, selon l'invention, l'organe conducteur souple 300 est incurvé en boucle sur l'élément intermédiaire 400. De ce fait, les sens d'enroulement de l'organe conducteur 300 dans la chambre auxiliaire 402 (sens des aiguilles d'une montre vers le centre de rotation O-O) est inverse du sens d'enroulement du même organe conducteur 300 sur l'extérieur de l'organe intermédiaire 400 (sens des aiguilles d'une montre en éloignement du centre de rotation O-O).

Plus précisément, selon le mode de réalisation préférentiel de l'invention représenté sur les figures annexées, la chambre auxiliaire 402 présente une section droite en forme générale de croissant.

A cette fin, l'élément intermédiaire 400 est défini principalement par deux parois cylindriques 410, 420, de rayon différent.

La paroi cylindrique externe 410 est centrée sur l'axe de rotation O-O. En revanche, la paroi cylindrique interne 420 de rayon inférieur est excentrée par rapport à l'axe de rotation O-O. Les deux parois 410, 420 se raccordent tangentiellement. La chambre auxiliaire 402 est définie entre la paroi cylindrique interne 420 et le rotor cylindrique de l'élément de boîtier 200.

Dans sa zone 430 diamétralement opposée à la zone 422 de raccordement entre les parois 410, 420, l'élément intermédiaire 400 présente une ouverture 432 traversante, d'orientation générale radiale par rapport à l'axe de rotation O-O.

Plus précisément, cette ouverture 432 est de préférence incurvée, par exemple sous forme d'un secteur hémicylindrique, pour se raccorder tangentiellement respectivement sur la surface interne de la paroi 420 et sur la surface externe de la paroi 410.

La forme incurvée de l'ouverture 432 dans laquelle est engagé l'organe conducteur 300 et au niveau de laquelle l'organe conducteur souple est incurvé en boucle comme indiqué précédemment, est conçue pour éviter de blesser ce conducteur 300.

Le fonctionnement du contacteur qui vient d'être décrit est essentiellement le suivant.

Lors d'une rotation de l'élément central de boîtier 200 (lié par exemple au volant du véhicule) dans le sens des aiguilles d'une montre, à partir de la position du contacteur représenté sur la figure 1, le ruban conducteur 300 quitte la chambre extérieure formée entre la surface extérieure de l'élément intermédiaire 400 et la surface interne de l'élément de boîtier 100, pour s'enrouler autour du diamètre extérieur de l'élément de boîtier 200.

Pendant cette manoeuvre, le ruban conducteur 300 subit une contrainte au passage dans l'ouverture 432. L'élément intermédiaire 400 se trouve par conséquent entraîné en rotation par le ruban conducteur 300 concentriquement à l'axe O-O.

Lors d'une rotation en sens inverse, c'est-à-dire une rotation de l'élément de boîtier 200 en sens contraire des aiguilles d'une montre, le rayon de courbure de l'ouverture 432 génère une contrainte sur le ruban 300 qui nécessite un certain couple pour l'entraînement de l'élément intermédiaire 400.

La partie libre du ruban 300 enroulée autour du diamètre extérieur de l'élément de boîtier 200 peut alors se dérouler vers la surface interne de l'élément intermédiaire 400, comme cela est schématisé sur la figure 2.

Lorsqu'à partir de cette position illustrée sur la figure 2, l'élément de boîtier central 200 est à nouveau déplacé dans le sens des aiguilles d'une montre, le ruban conducteur 300 est à nouveau enroulé en spires de rayon inférieur sur la surface extérieure de l'élément de boîtier 200 comme représenté sur la figure 1.

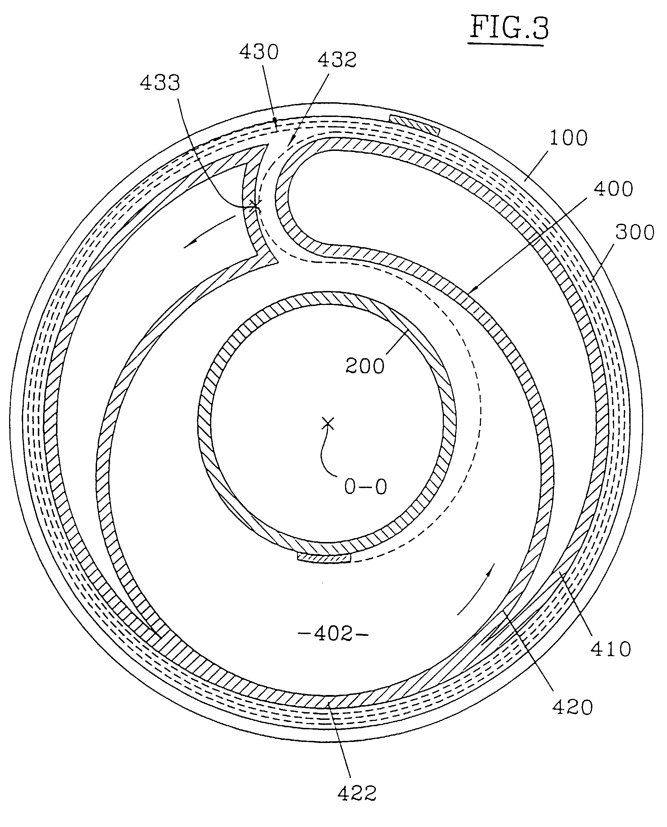

En revanche, lorsqu'à partir de la position représentée sur la figure 2 dans laquelle les spires du ruban logées dans la chambre auxiliaire 402 sont plaquées intégralement contre la surface interne de l'élément intermédiaire 400, la rotation de l'élément de boîtier 200 est poursuivie dans le sens contraire des aiguilles d'une montre, le ruban 300 est plaqué contre la surface concave 433 de l'ouverture 432. Le ruban conducteur 300 entraîne alors l'élément intermédiaire 400 dans le sens contraire des aiguilles d'une montre, comme représenté sur la figure 3, et le ruban conducteur 300 quitte la chambre auxiliaire 402 et prend place entre la surface extérieure de l'élément intermédiaire 400 et la surface interne de l'élément de boîtier 100. Pendant cette manoeuvre, le ruban 300 subit de nouveau une contrainte dans l'ouverture 432, plus précisément sur la surface concave 433 de celle-ci.

Dans le cadre de la présente invention, la chambre auxiliaire 402 est de préférence dimensionnée pour recevoir une longueur de ruban conducteur 300 correspondant à environ 80% des déplacements relatifs demandés à l'utilisation entre les éléments de boîtier 100, 200 sans entraîner de déplacement de l'élément intermédiaire 400.

L'homme de l'art comprendra que le contacteur électrique tournant qui vient d'être décrit permet d'utiliser des longueurs de ruban raccourcies par rapport aux dispositifs antérieurement proposés.

En effet, le contacteur électrique tournant permet d'utiliser le ruban 300 de longueur courte suivant deux configurations particulières en fonction des courses angulaires d'utilisation de l'appareil.

La première configuration correspond à des débattements courts, typiquement une rotation relative entre les éléments de boîtier 100, 200 inférieure à un tour. Dans cette première configuration, le ruban est déroulé du diamètre extérieur de l'élément de boîtier central 200 vers la surface interne de l'élément intermédiaire 400 et vice versa comme représenté sur les figures 1 et 2. Du fait d'une utilisation restreinte de ce principe de desserrement et resserrement des spires dans une chambre, quant à la course angulaire requise, le contacteur électrique tournant ne requiert qu'une longueur réduite de ruban conducteur 300 par rapport à des dispositifs antérieurs qui demandent un tel desserrement et resserrement des spires du ruban 300 pour la totalité de la plage de rotation relative autorisée entre les éléments de boîtier 100 et 200.

La deuxième configuration de fonctionnement du contacteur conforme à l'invention, correspond à un débattement entier, c'est-à-dire à une rotation relative entre les éléments de boîtier 100, 200 sur la plage maximale autorisée. Dans le cadre de cette configuration, on utilise le retournement du ruban 300 dans l'ouverture 432 de l'élément intermédiaire 400. Comme cela a été démontré antérieurement, ce retournement permet de limiter la longueur du ruban 300 par rapport aux contacteurs dans lesquels le ruban 300 est conformé en spirale unique sans retournement.

La présente invention offre par conséquent de nombreux avantages par rapport aux contacteurs électriques tournants antérieurs connus.

Elle permet notamment d'utiliser un ruban 300 de longueur raccourcie tout en limitant les contraintes appliquées au ruban 300. En effet, dans 80% du fonctionnement du contacteur, le ruban 300 n'est pas déplacé par rapport à l'ouverture 432 de l'élément intermédiaire 400 et par conséquent ne subit pas de contrainte particulière.

Bien entendu la présente invention n'est pas limitée au mode de réalisation particulier qui vient d'être décrit mais s'étend à toute variante conforme à son esprit.

En particulier, l'invention pourra aisément être transposée à une variante selon laquelle la chambre auxiliaire 402 est formée non point sur l'intérieur de l'élément intermédiaire 400 mais sur l'extérieur de celui-ci, soit entre la surface extérieure de l'élément intermédiaire 400 et la surface interne de l'élément de boîtier 100.

De préférence en position point milieu du contacteur, la longueur d'organe conducteur souple 300 placée dans la chambre auxiliaire 402 est de l'ordre de la moitié de la longueur totale de cet organe 300.

Le contacteur électrique tournant précédemment décrit présente une chambre auxiliaire 402 excentrée. Lorsque le conducteur souple 300 vient se plaquer contre la surface interne de la paroi cylindrique 420 de l'élément intermédiaire 400, il applique sur celui-ci un couple de basculement provoquant un arc-boutement de cet élément intermédiaire. En outre, à l'utilisation, il se produit un premier couple résistant dû au frottement des spires du conducteur souple 300 entre elles et un couple résistant dû au frottement de l'élément intermédiaire 400 par rapport aux éléments 100, 200 du boîtier.

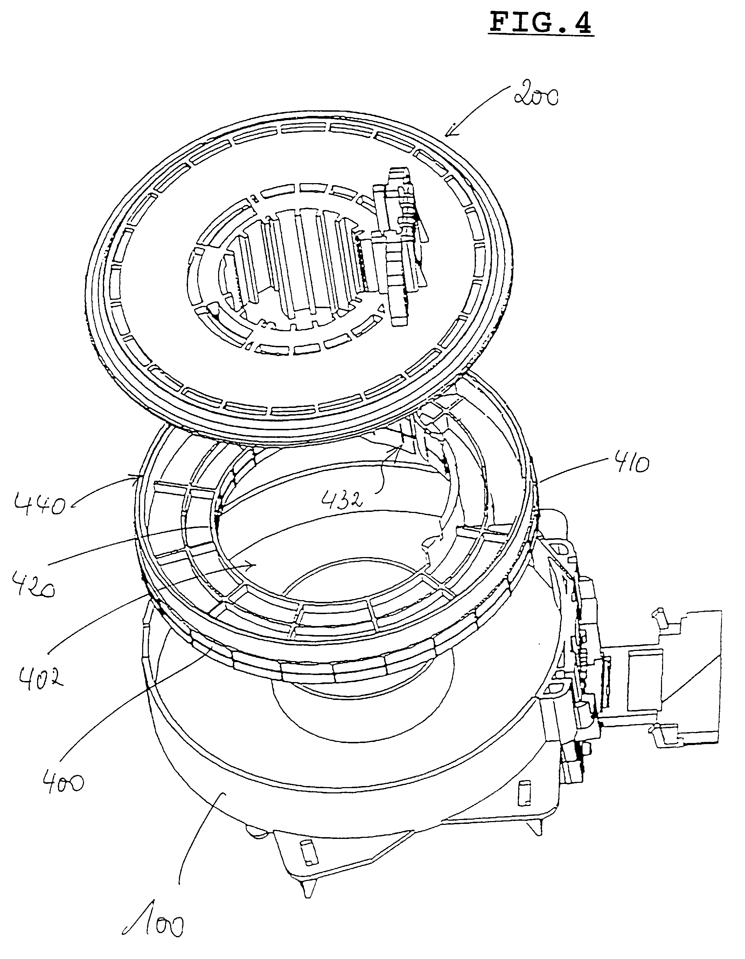

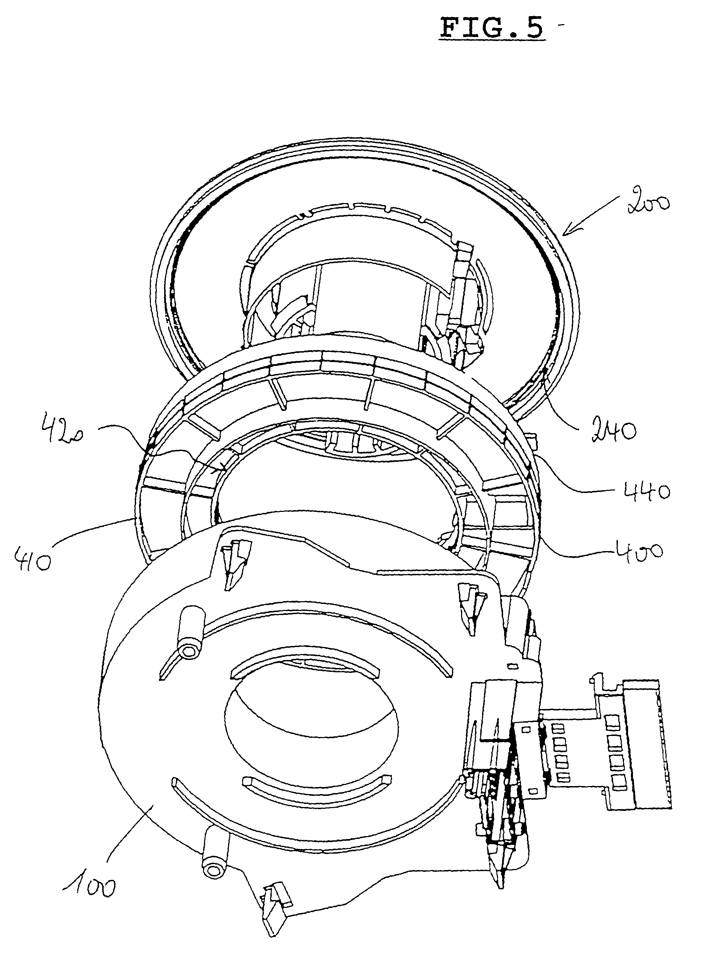

Pour améliorer ce contacteur, on peut prévoir, comme illustré sur les figures 4 et 5, de guider l'élément intermédiaire 400 sur l'élément mobile 200. Ce guidage peut être réalisé par exemple sous forme d'une nervure annulaire 440 formée en périphérie sur l'élément intermédiaire 400, laquelle nervure 440 est engagée dans une gorge complémentaire 240 de l'élément mobile 200.

Ainsi, l'élément mobile 200 à tendance à entraîner l'élément intermédiaire 400 ce qui supprime le couple dû à l'arc-boutement.

Par ailleurs, il peut être prévu des butées, sur le contacteur électrique tournant, entre l'élément fixe 100 et l'élément mobile 200, ou encore entre l'élément intermédiaire 400 et l'un de ces éléments 100 ou 200, pour limiter l'angle de rotation autorisé, par exemple et non limitativement à cinq tours, entre les éléments 100 et 200.

Dans ce contexte, on peut prévoir deux configurations extrêmes autorisées pour l'organe conducteur souple 300 : l'une dans laquelle l'organe conducteur souple est intégralement enroulé, sous forme de spires serrées sur l'élément central 200 de la chambre auxiliaire 402 et l'autre dans laquelle l'organe conducteur souple 300 est intégralement disposé dans la chambre entre l'élément intermédiaire 400 et l'organe externe 100.

Cependant, on peut également prévoir que, dans la seconde configuration, correspondant à une position extrême autorisée par les butées mécaniques, il reste une certaine longueur de ruban conducteur 300 dans la chambre auxiliaire 402. Cette disposition permet d'augmenter le débattement angulaire autorisé entre les éléments 100 et 200, sans déplacement de l'élément intermédiaire 400, par simple variation du diamètre moyen des spires dans la chambre auxiliaire 402. En d'autres termes, cette disposition permet d'augmenter la plage angulaire de fonctionnement du contacteur, sans déplacement de l'organe conducteur souple 300 dans le passage 432.

## Revendications

1. Contacteur électrique tournant du type connu comprenant deux éléments de boîtier (100, 200) susceptibles de rotation relative, un organe conducteur souple (300) placé entre ces deux éléments (100, 200), et un élément intermédiaire (400) positionné entre les deux éléments de boîtier (100, 200) pour définir deux chambres, l'une interne, l'autre externe, entre cet élément intermédiaire (400) et respectivement l'un des éléments de boîtier (100, 200), ledit élément intermédiaire (400) étant librement mobile par rapport aux éléments de boîtier (100, 200) et possédant une ouverture généralement radiale (432) dans laquelle est engagé l'organe conducteur souple (300) de sorte que l'organe conducteur souple (300) est incurvé en boucle sur l'élément intermédiaire (400), caractérisé par le fait que l'ouverture radiale (432) formée dans l'élément intermédiaire (400) génère sur l'organe conducteur souple (300) une contrainte telle que cet organe conducteur souple (300) ne se déplace dans ladite ouverture radiale (432) et n'entraîne ledit élément intermédiaire que lorsque le tronçon de l'organe conducteur souple (300) contenu dans l'une desdites chambres, formant chambre auxiliaire (402), est intégralement plaqué contre la surface de l'élément intermédiaire (400) définissant cette chambre auxiliaire, de sorte que cette chambre auxiliaire (402) reçoive un nombre variable de spires de l'organe conducteur (300) souple correspondant à une longueur sensiblement constante de cet organe, selon que ces spires sont plaquées contre ledit élément intermédiaire (400) ou ledit élément de boîtier (200) associé et définissant la chambre auxiliaire (402), lors d'un déplacement relatif à rotation des deux éléments de boîtier (100, 200) sans rotation relative sensible entre ledit élément intermédiaire (400) et l'autre élément de boîtier (100).

2. Contacteur selon la revendication 1, caractérisé par le fait que la chambre auxiliaire (402) est une chambre interne à l'élément intermédiaire (400) définie entre l'élément intermédiaire (400) et un élément central (200) composant l'un des deux éléments de boîtier.

3. Contacteur selon la revendication 1, caratérisé par le fait que la chambre auxiliaire (402) est une chambre externe à l'élément intermédiaire (400) définie entre l'élément intermédiaire (400) et un élément externe (100) composant l'un des deux éléments de boîtier.

4. Contacteur selon l'une des revendications 1 à 3, caractérisé par le fait que la chambre auxiliaire (402) est définie entre l'élément intermédiaire (400) et l'élément de boîtier (200) mobile à rotation.

5. Contacteur selon l'une des revendications 1 à 4, caractérisé par le fait que l'élément (400) est défini par deux parois cylindriques (410, 420) excentrées.

6. Contacteur selon la revendication 5, caractérisé par le fait que l'une des parois cylindriques (410), externe, est centrée sur l'axe de rotation (O-O) du contacteur, tandis que l'autre paroi cylindrique (420), interne, est excentrée par rapport à cet axe de rotation (O-O).

7. Contacteur selon l'une des revendications 5 ou 6, caractérisé par le fait que les deux parois cylindriques (410, 420) se raccordent tangentiellement.

8. Contacteur selon l'une des revendications 1 à 7, caractérisé par le fait que l'ouverture (432) est incurvée, par exemple en secteur de cylindre.

9. Contacteur selon l'une des revendications 1 à 8, caractérisé par le fait que la chambre auxiliaire (402) est en forme générale de croissant.

10. Contacteur selon l'une des revendications 1 à 9, caractérisé par le fait que la chambre auxiliaire (402) est dimensionnée pour recevoir une longueur de ruban (300) autorisant un déplacement relatif à rotation entre les deux éléments de boîtier (100, 200), approximativement sur 80% du fonctionnement du contacteur, sans imposer de déplacements relatifs de l'élément intermédiaire (400).

11. Contacteur selon l'une des revendications 1 à 10, caractérisé par le fait que l'élément intermédiaire (400) est guidé par l'élément mobile (100).

12. Contacteur selon la revendication 11, caractérisé par le fait que le guidage de l'élément intermédiaire (400) sur l'élément mobile (100) est obtenu par l'engagement d'une nervure (440) dans une gorge annulaire complémentaire (240) prévue sur ces éléments.

13. Contacteur selon l'une des revendications 1 à 12, caractérisé par le fait qu'il est prévu des butées, entre l'élément fixe (100) et l'élément mobile (200), ou encore entre l'élément intermédiaire (400) et un de ces éléments (100 ou 200), pour limiter l'angle de rotation autorisé, par exemple et non limitativement à cinq tours, entre les éléments (100 et 200).

14. Contacteur selon l'une des revendications 1 à 13, caractérisé par le fait qu'il est adapté pour définir deux configurations extrêmes autorisées pour l'organe conducteur souple (300) : l'une dans laquelle l'organe conducteur souple est intégralement enroulé, sous forme de spires serrées sur l'élément du boîtier (200) qui définit la chambre auxiliaire (402) et l'autre dans laquelle l'organe conducteur souple (300) est intégralement disposé entre l'élément intermédiaire (400) et l'autre élément (100) du boîtier.

15. Contacteur selon l'une des revendications 1 à 13, caractérisé par le fait qu'il est adapté pour définir deux configurations extrêmes autorisées pour l'organe conducteur souple (300) : l'une dans laquelle l'organe conducteur souple est intégralement enroulé, sous forme de spires serrées sur l'élément du boîtier (200) qui définit la chambre auxiliaire (402) et l'autre dans laquelle l'organe conducteur souple (300) est en partie disposé entre l'élément intermédiaire (400) et l'autre élément (100) du boîtier, et en partie disposé dans la chambre auxiliaire (402).

## Patentansprüche

1. Elektrischer Drehschalter der bekannten Art mit zwei Gehäuseelementen (100, 200), welche in relativer Drehung zueinander bewegt werden können, einem biegsamen Leiterorgan (300), welches zwischen diesen beiden Elementen (100, 200) angeordnet ist, und einem zwischen den beiden Gehäuseelementen (100, 200) positionierten Zwischenelement (400), um zwei Kammern, wovon die eine innenliegend und die andere außenliegend ist, zwischen diesen Zwischenelement (400), und jeweils einem der Gehäuseelemente (100, 200) zu definieren, wobei das Zwischenelement (400) freibeweglich bezüglich der Gehäuseelemente (100, 200) ist und eine allgemeine radiale Öffnung (432) aufweist, in welche das biegsame Leiterorgan (300) eingeschoben ist, so daß das biegsame Leiterorgan (300) in einer Schleife auf dem Zwischenelement (400) gebogen ist, dadurch gekennzeichnet, daß die in dem Zwischenelement (400) gebildete radiale Öffnung (432) auf dem biegsamen Leiterorgan (300) eine derartige Beanspruchung erzeugt, daß sich dieses biegsame Leiterorgan (300) nur dann in der radialen Öffnung (432) verschiebt und das Zwischenelement (400) mit sich zieht, wenn das Teilstück des biegsamen Leiterorgans (300), welches in der einen der Kammern enthalten ist, welche eine Nebenkammer (402) bildet, uneingeschränkt gegen die Fläche des diese Nebenkammer definierenden Zwischenelementes (400) gepreßt wird, so daß diese Nebenkammer (402) eine variable Anzahl von Spiralwindungen des biegsamen Leiterorgans (300) entsprechend einer praktisch konstanten Länge dieses Organs aufnimmt, wobei diese Spiralwindungen je nachdem gegen das Zwischenelement (400) oder das zugeordnete und die Nebenkammer (402) definierende Gehäuseelement (200) während einer relativen Drehverschiebung der beiden Gehäuseelemente (100, 200) ohne praktische relative Drehung zwischen dem Zwischenelement (400) und dem anderen Gehäuseelement (100) gepreßt werden.

2. Schalter gemäß Anspruch 1, dadurch gekennzeichnet, daß die Nebenkammer (402) eine innerhalb des Zwischenelementes (400) angeordnete Kammer ist, welche zwischen dem Zwischenelement (400) und einem das eine der beiden Gehäuseelemente bildenden Mittelement (200) definiert ist.

3. Schalter gemäß Anspruch 1, dadurch gekennzeichnet, daß die Nebenkammer (402) eine außerhalb des Zwischenelementes (400) angeordnete Kammer ist, welche zwischen dem Zwischenelement (400) und einem das eine der beiden Gehäuseelemente bildenden Außenelement (100) definiert ist.

4. Schalter gemäß einem der Ansprüche 1 bis 3, dadurch gekennzeichnet, daß die Nebenkammer (402) zwischen dem Zwischenelement (400) und dem in Drehung beweglichen Gehäuseelement (200) definiert ist.

5. Schalter gemäß einem der Ansprüche 1 bis 4, dadurch gekennzeichnet, daß das Zwischenelement (400) von zwei exzentrierten zylindrischen Wänden (410, 420) definiert ist.

6. Schalter gemäß Anspruch 5, dadurch gekennzeichnet, daß die eine der zylindrischen Wände (410), welche außen liegt, auf der Drehachse (0-0) des Schalters zentriert ist, während die andere zylindische Wand (420), welche innen liegt, bezüglich dieser Drehachse (0-0) exzentriert ist.

7. Schalter gemäß einem der Ansprüche 5 oder 6, dadurch gekennzeichnet, daß sich die beiden zylindischen Wände (410, 420) tangential aneinander anschließen.

8. Schalter gemäß einem der Ansprüche 1 bis 7, dadurch gekennzeichnet, daß die Öffnung (430) gebogen ist, und zwar beispielsweise als Zylinderbogenstück.

9. Schalter gemäß einem der Ansprüche 1 bis 8, dadurch gekennzeichnet, daß die Nebenkammer (402) die allgemeine Form eines Halbmondes aufweist.

10. Schalter gemäß einem der Ansprüche 1 bis 9, dadurch gekennzeichnet, daß die Nebenkammer (402) dafür dimensioniert ist, eine Bandlänge (300) aufzunehmen, welche eine relative Drehverschiebung zwischen den Gehäuseelementen (100, 200) ungefähr über 80% des Betriebes des Schalters ermöglicht, ohne relative Verschiebungen des Zwischenelementes (400) zu veranlassen.

11. Schalter gemäß einem der Ansprüche 1 bis 10, dadurch gekennzeichnet, daß das Zwischenelement (400) von dem beweglichen Element (100) geführt wird.

12. Schalter gemäß Anspruch 11, dadurch gekennzeichnet, daß die Führung des Zwischenelementes (400) auf dem beweglichen Element (100) durch Eingriff einer Rippe (440) in eine auf diesen Elementen vorgesehene, komplementäre, ringförmige Rille (240) erzielt wird.

13. Schalter gemäß einem der Ansprüche 1 bis 12, dadurch gekennzeichnet, daß Anschläge zwischen dem festen Element (100) und dem beweglichen Element (200), oder auch zwischen dem Zwischenelement (400) und dem einen dieser Element (100 oder 200) vorgesehen sind, um den zulässigen Drehwinkel zwischen den Elementen (100 und 200) beispielsweise und nicht begrenzend auf 5 Umdrehungen zu begrenzen.

14. Schalter gemäß einem der Ansprüche 1 bis 13, dadurch gekennzeichnet, daß er dafür eingerichtet ist, zwei zulässige extreme Konfigurationen für das biegsame Leiterorgan (300) zu definieren: die eine, in welcher das biegsame Leiterorgan (300) vollständig in Form von Spiralwindungen aufgerollt ist, welche auf dem Gehäuseelement (200), welches die Nebenkammer (402) definiert, befestigt sind, und die andere, in welcher das biegsame Leiterorgan (300) vollständig zwischen dem Zwischenelement (400) und dem anderen Element (100) des Gehäuses angeordnet ist.

15. Schalter gemäß einem der Ansprüche 1 bis 13, dadurch gekennzeichnet, daß er dafür eingerichtet ist, zwei zulässige extreme Konfigurationen für das biegsame Leiterorgan (300) zu definieren: die eine, in welcher das biegsame Leiterorgan vollständig in Form von Spiralwindungen aufgerollt ist, welche auf dem Gehäuseelement (200), welches die Nebenkammer (402) definiert, befestigt sind, und die andere, in welcher das biegsame Leiterorgan (300) teilweise zwischen dem Zwischenelement (400) und dem anderen Element (100) des Gehäuses und teilweise in der Nebenkammer (402) angeordnet ist.

## Claims

1. Rotating electrical connector of known type comprising two case members (100, 200) capable of rotation relative to one another, a flexible member (300) disposed between these two members (100, 200) and an intermediary member (400) positioned between the two case members (100, 200) to define an inner and an outer chamber between this intermediary member (400) and one of the case members (100, 200) respectively, said intermediary member (400) being capable of moving freely relative to case members (100, 200) and having an opening that is generally radial in shape (432) in which the flexible conducting member (300) is inserted such that said flexible conducting member (300) is curved inwards in a loop on the intermediary member(400), characterized in that the radial opening (432) in intermediary member (400) causes stress on the flexible conducting member (300) such that this flexible conducting member (300) is only displaced in said radial opening (432) and only draws said intermediary member when the section of the flexible conducting member (300), contained in one of the said chambers that constitutes an auxiliary chamber (402), is completely pressed against the surface of the intermediary member (400) that defines this auxiliary chamber such that this auxiliary chamber (402) receives a variable number of turns of the flexible conducting member (300) that are the equivalent of a more or less constant length of said member depending on whether said turns are pressed against said intermediary member (400) or said associated case member (200) that defines the auxiliary chamber (402) during a relative rotational displacement of the two case members (100, 200), but without any detectable rotation between said intermediary member (400) and the other case member (100).

2. Connector of claim 1 characterized in that the auxiliary chamber (402) is a chamber within the intermediary chamber (400) defined between the intermediary member (400) and a central member (200) that constitutes one of the two case members.

3. Connector of claim 1 characterized in that the auxiliary chamber (402) is a chamber external to the intermediary chamber (400) defined between the intermediary member (400) and an external member (100) that constitutes one of the two case members.

4. Connector of any of claims 1 to 3 characterized in that the auxiliary chamber (402) is defined between intermediary member (400) and mobile rotating case member (200).

5. Connector of any of claims 1 to 4 characterized in that the intermediary member (400) is defined by two off-center cylindrical walls (410, 420).

6. Connector of claim 5 characterized in that one of the external cylindrical walls (410) is centered on the axis of rotation (o-o) of the connector while the other, internal cylindrical wall (420) is off-center in relation to axis of rotation (o-o).

7. Connector of claim 5 or 6 characterized in that the two cylindrical walls (410, 420) are tangentially connected.

8. Connector of any of claims 1 to 7 characterized in that the opening (432) curves inwards and has the shape, for example, of a sector of a cylinder.

9. Connector of any of claims 1 to 8 characterized in that in that the auxiliary chamber (402) has the general shape of a crescent.

10. Connector of any of claims 1 to 9 characterized in that the auxiliary chamber (402) is dimensioned to receive a length of conducting strip (300) that enables relative rotary displacements between the two case members (100, 200) of approximately 80% of the operation of the connector without causing relative displacement of the intermediary member (400).

11. Connector of any of claims 1 to 10 characterized in that the intermediary member (400) is guided by the movable member (100).

12. Connector of claim 11 characterized in that the intermediary member (400) is guided on movable member (100) using a gill (440) inserted in an additional annular throat (240) on said members.

13. Connector of any of claims 1 to 12 characterized in that stops are provided between fixed member (100) and movable member (200) or between intermediary member (400) and either member (100 or 200) to limit the permitted angle of rotation between the members (100 and 200) to, as a non-limitative example, five turns.

14. Connector of any of claims 1 to 13 characterized in that two permitted extreme configurations may be achieved for flexible conducting member (300) : in one the flexible conducting member is fully wound in turns tightened against case member (200) that defines auxiliary chamber (402) ; in the other configuration flexible conducting member (300) is entirely disposed between intermediary member (400) and the other member (100) of the case.

15. Connector of any of claims 1 to 13 characterized in that two permitted extreme configurations may be achieved for flexible conducting member (300) : in one the flexible conducting member is fully wound in turns tightened against case member (200) that defines auxiliary chamber (402) ; in the other configuration flexible conducting member (300) is partly disposed between intermediary member (400) and the other member (100) of the case and partly disposed in the auxiliary chamber (402).
